# EUROPÄISCHE PATENTSCHRIFT

(11) **EP 3 919 781 B1**
(45) Veröffentlichungstag und Bekanntmachung des Hinweises auf die Patenterteilung: **08.10.2025**
(21) Anmeldenummer: 21000150.9
(22) Anmeldetag: 02.06.2021
(51) Int. Cl.: F16H 25/20, G01L 5/00, F16B 35/00, F16H 57/01, F16B 31/02, F16H 57/04

(54) **VERBESSERTE BAUGRUPPE MIT HELIXFORM UND ANLAGE UMFASSEND DIE VERBESSERTE BAUGRUPPE**
IMPROVED HELIX SHAPE ASSEMBLY AND SYSTEM COMPRISING THE IMPROVED ASSEMBLY
MODULE AMÉLIORÉ HÉLICOÏDALE ET INSTALLATION COMPRENANT LE MODULE AMÉLIORÉ

(30) Priorität: 03.06.2020 DE 202020103194 U
(43) Veröffentlichungstag der Anmeldung: 08.12.2021
(73) Patentinhaber: Bornemann Gewindetechnik GmbH & Co. KG, 31073 Delligsen (DE)
(72) Erfinder: Gereke-Bornemann, Hans, 31073 Delligsen (DE); von Soden, Moritz, 31073 Delligsen (DE)
(74) Vertreter: Müller-Mergenthaler, Maren

(56) Entgegenhaltungen:
- EP-A2- 0 697 588
- EP-A2- 2 510 873
- DE-A1- 102005 059 480
- DE-A1- 102014 214 931

## Beschreibung

Die vorliegende Erfindung ist im Bereich des Anlagen und Maschinen angesiedelt, bei denen eine präzisere Steuerung oder auch Regelung von Gewindespindeln benötigt wird. Grundsätzlich sind Lösungsvorschläge hierfür schon länger Gegenstand der Forschung und Entwicklung. So beschreibt die DE 59 269 A wie ein Draht im Gewinde einer Positionierungsspindel als elektrischer Widerstand dienen und über seinen Messwert einen Rückschluss auf eine Entfernung zulassen kann; ergänzend hierzu schlägt die DE 727 080 A vor, über einen Draht auch die Haltekraft eines Dübels einzustellen. Diesen Gedanken weiterbildend schlägt die DE 1 836 155 U vor, einen Federdraht berührungsfrei auf Bruch oder Beschädigung zu prüfen. Auch die EP 0 061 821 A beschreibt einen berührungslosen Drehmoment-Sensor, welcher als Teil eines Kraft ausleitenden Getriebes einer Dreh-Verschluss-Anlage vorgesehen ist. Die EP 0 697 588 A2 offenbart allgemein wie ein Körperschall-Sensor im Inneren eines Maschinenelements angeordnet werden kann.

Ergänzend schlägt die DE 31 11 858 A1 vor, Bauteil-Risse über lichtleitende, fest mit dem Bauteil verbundene Fasern oder Filme zu detektieren. Gleichsinnig sieht die DE 35 00 230 A1 vor, Risse in Schrauben, Bolzen oder Wellen über innenseitige Stromprüfleitungen und/oder über die Leitfähigkeit des Bauteils selbst zu detektieren. Die WO 1997 023 762 A2 schlägt ergänzend vor, die Dicke einer Schutzschicht eines Bauteils über dessen Leitfähigkeit und Wechselstromwiderstand - die sog. Impedanz - zu bestimmen (weitere Informationen hierzu finden sich in den im Dokument WO 1997 023 762 A3 benannten Dokumenten).

Die DE 197 12 436 A1 schlägt verschiedene Möglichkeiten vor, eine Messeinrichtung mit einer Schraube oder Niete zu koppeln, um den Vorgang des Verschraubens besser steuern und regeln zu können.

Die EP 1 202 032 A1 schlägt vor, eine Sensorplatte stoffschlüssig mit einem Bauteil zu koppeln, dessen elastische Torsion und/oder mechanische Deformation im Betrieb einer Anlage bestimmt werden und als Steuer- oder Regel-Parameter verwendet werden soll. Gleichsinnig schlägt die EP 2 510 873 A2 vor, eine starre Knochenschraube mit biometrischen Sensoren zu versehen, um biometrische Parameter erfassen zu können; analog schlägt die DE 10 2014 214 931 A1 vor, eine Befestigungsschraube mit einem eingeklebten Dehnungselement zu versehen, um die Vorspannkraft einer Verschraubung bestimmen zu können.

Die KR 10 2002 0081 198 A , KR 10 2003 0087 788 A , EP 1 589 237 A1 und DE 10 2009 007 425 B3 erläutern weitere Möglichkeiten, eine Schraube oder ein Gewinde mit technischen Zusatzfunktionen auszurüsten.

### ALLGEMEINER HINTERGRUND

Die vorliegende Erfindung betrifft eine Gewindespindel gemäß Anspruch 1 und eine Anlage umfassend die Gewindespindel gemäß Anspruch 1.

Die DE 195 47 318 A1 offenbart einen Ankerstab zum Einleiten von Zug- oder Druck-Kräften in Baustoffe, erläutert aber nachteilig nicht, wie diese erheblichen Zug- oder Druck-Kräfte steuer- oder regelbar sein könnten;
die US 4 811 618 A offenbart eine auf und mit einer Spindel verfahrbare Baugruppe mit hintergriffener Führungsfeder, welche aber ebenso nachteilig nicht zur Steuerung oder Regelung herangezogen wird;
die JP 1 1285 933 A beschreibt, wie eine Kraft ausleitende Welle mit einem zusätzlichen, nachteilig Platz fordernden Torsions-Sensor im Getriebeteil koppelbar ist, um das Drehmoment zu steuern; allerdings ist dies nachteilig nicht auf große Lasten ausgelegt.

### BESCHREIBUNG DES STANDES DER TECHNIK

Gattungsgemäße Gewindespindeln weisen Mittel zur gesteuerten und/oder geregelten Verwendung auf.

Die am Markt verfügbaren Lösungen aus dem Bereich der Torsions-, Kraft- und Drehmoment-Messtechnik offenbaren bezüglich der Anforderungen von Industrie 4.0 nachteilige Schwächen. Sie sind mit einem hohen Integrationsaufwand, hohen Anschaffungskosten und einer aufwändigen und komplizierten Messkette verbunden, weshalb sie zumeist nur für Messtechnik-Spezialisten aus dem Bereich Forschung/Entwicklung nützlich sind.

Nachteilig sind im Markt weiterhin nur Baugruppen verfügbar, die entweder nicht auf große Lasten ausgelegt sind oder keine gattungsgemäßen Mittel aufweisen.

Die DE 10 2005 059 480 A1 offenbart eine eine KfZ-Hebebühne mit einem Spindelantrieb mit einer Gewindespindel mit Gewinde mit externen, nachteilig Raum fordernden Sensorbaugruppen, welche eine Gleichlaufregelung ermöglichen.

Etablierte Gewindespindeln können bisher nur mit zusätzlichen, nachteilig Raum fordernden Sensorbaugruppen gesteuert sowie geregelt werden.

Aufgabe der vorliegenden Erfindung war es daher, die Nachteile des Standes der Technik zu überwinden und eine Baugruppe bereitzustellen, welche trotz einer Auslegung auf hohe Lasten verbesserte Mittel zur gesteuerten und/oder geregelten Nutzung bereitzustellen vermag.

Weitere Aufgabe war, eine Anlage anzugeben, bei der die verbesserte Baugruppe besonders vorteilhaft Anwendung finden kann.

Die Lösung dieser Aufgaben erfolgt gemäß den Merkmalen des unabhängigen Anspruches 1 und des abhängigen Anspruches 4. Vorteilhafte Ausführungsformen ergeben sich aus den weiteren, abhängigen Ansprüchen sowie der nachfolgenden Beschreibung.

### ZUSAMMENFASSUNG DER ERFINDUNG

Erfindungsgemäß weist eine Gewindespindel mit Gewinde und einer Sensorbaugruppe die Merkmale des Anspruches 1 auf.

Eine Anlage umfassend die erfindungsgemäße Gewindespindelist aus einer Gruppe von Anlagen ausgewählt, die Gruppe von Anlagen bestehend aus Hebeanlage, Fahrzeughebeanlage, Bahnhebeanlage, Bohranlage, Windkraftanlage, Hebebockanlage, Hebebockanlage mit mehreren Gleichlauf-Hebeböcken, Kernbohranlage, Kernbohranlage für Vollzylinder, Tiefloch-Bohranlage.

### BESCHREIBUNG DER ERFINDUNG UND VORTEILHAFTER MERKMALE

Eine erfindungsgemäße Gewindespindel weist die Merkmale des Anspruches 1 auf.

Erfindungsgemäß ist die Sensorbaugruppe stoffschlüssig mit der Gewindespindel verbunden.

Erfindungsgemäß ist die Sensorbaugruppe im Inneren des Körpers der Gewindespindel mit Abstand zum Gewinde angeordnet.

Durch Kombination der beiden Maßnahmen mit einem Überlast-Sensor in der Sensorbaugruppe wird die Gewindespindel dadurch selbst zum Überlast-Sensor: Eine die Gewindespindel deformierende Kraft wird gleichsinnig die Sensorbaugruppe deformieren.

Durch einen erfindungsgemäß eingerichteten Sensor können vorteilhaft Gewindespindeln selbst ohne zusätzliche Raumerfordernis als Sensor fungieren; eine Gewindespindel kann vorteilhaft als Schnittstelle für das Internet der Dinge dienen. Solche Gewindespindeln erfassen und verarbeiten besonders bevorzugt die Interaktion mit einer Umgebung und stellen die Verbindung zur digitalen Welt her. Ein erfindungsgemäßer Fokus liegt dabei auf Anwendungen im Anlagen- und Maschinenbau, in denen Gewindespindeln zum Einsatz kommen, insbesondere in der Hebetechnik. Für die Hersteller und Betreiber solcher Anlagen und Maschinen ist es von hoher Relevanz, zusätzliche Informationen über die Komponenten und Prozesse zu erhalten. Diese werden in vielerlei Hinsicht benötigt, beispielsweise um unnötige Anlagenstillstände zu vermeiden, Prozesse und Systeme zu regeln und zu steuern, Komponenten besser auslegen zu können, Wartungen vorausschauend zu planen, die Energieeffizienz zu erhöhen oder Fehlerquellen leichter zu identifizieren.

Die vorliegende Erfindung bietet ein Produkt, mit dem eine Anlage leicht auf die Anforderungen der Industrie 4.0 angepasst werden kann. Die Gewindespindel selbst wird mit den relevanten, sensorischen Funktionen ausgestattet und dadurch zum Überlast-Sensor.

Auf der miniaturisierten Sensorelektronik werden alle relevanten Messdaten bereits in der Gewindespindel erfasst, fusioniert, gespeichert und kabellos übertragen. Die Daten können vorteilhaft mit einer App auf einem Smartphone und/oder Tablet sowie mit einem Industrie-Gateway empfangen werden. Über dieses können die Signale vorverarbeitet und über industrielle Bussysteme an übergeordnete Messsysteme oder Steuerungen übertragen werden. So ist vorteilhaft sichergestellt, dass die smarte Gewindespindel mit bereits bestehenden Systemen kompatibel ist. Gerade die Hersteller von Hebeanlagen müssen oft Kraft- bzw. Druck-Messdosen in Ihre Anlagen integrieren um eine Überlast messen und klar identifizieren zu können. Die vorliegend vorgeschlagene, integrierte Sensorik kann die nachteilige, zusätzliche, extern angebrachte Sensorik komplett ersetzen und die Anlagen somit einfacher, günstiger und sicherer gestalten.

Bevorzugt umfasst die Sensorbaugruppe der Gewindespindel neben einem Überlast-Sensor mindestens eine berührungslose Kommunikations-Einrichtung.

Bevorzugt umfasst die Sensorbaugruppe mindestens eine weitere Einrichtung, die Einrichtung ausgewählt aus einer Gruppe von Einrichtungen, die Gruppe von Enrichtungen bestehend aus WLAN-Chipsatz, Stromerzeugungs-Empfangsspule, Sender-Einrichtung, Datenkompressions-Einrichtung, integrierter Schaltkreis, Kommunikations-Chipsatz, Torsions-Sensor, Last-Sensor, Spannungs-Sensor, Strom-Sensor, Widerstands-Sensor, Temperatur-Sensor, Impedanz-Messbrücke, Stromsignal-Generator, Wechselstromsignal-Generator, Schallsignal-Generator, Ultraschallsignal-Generator, FT-Analyse-Chipsatz, FEM-Analyse-Chipsatz, Analyse-Chipsatz, programmierbarer Chipsatz, Chipsatz mit zentrosymmetrisch entlang einer Längs-Achse der Gewindespindel ausgerichtetem Schwerpunkt, Schüttdichte-Sensor, Dichte-Sensor, Viskositäts-Sensor, Druck-Sensor, Drehmoment-Sensor, Positions-Sensor, Abstands-Sensor, Dichtigkeits-Sensor, Bruch-Sensor, Datenfusions-Chipsatz, Datenverarbeitungs-Chipsatz, programmierbarer Prozessor, Datenspeicher-Einheit, Datenprotokoll-Einheit, Verschlüsselungs-Chipsatz, Kommunikations-Chipsatz mit industriellem Kommunikationsprotokoll, Kommunikations-Chipsatz mit Bus-konformem Kommunikationsprotokoll, Beschleunigungs-Sensor, Vibrations-Sensor.

Eine Anlage umfassend die Gewindespindel gemäß Anspruch 1 ist eine Anlage aus einer Gruppe von Anlagen, die Gruppe von Anlagen bestehend aus Hebeanlage, Fahrzeughebeanlage, Bahnhebeanlage, Bohranlage, Windkraftanlage, Hebebockanlage, Kernbohranlage, Kernbohranlage für Vollzylinder, Tiefloch-Bohranlage.

Bevorzugt ist die Anlage eine Hebeanlage mit mindestens 2, bevorzugt mindestens 4, Hebeböcken.

Bevorzugt umfasst die Anlage Hebeböcke, wobei die wi mit Hebeböcke auf Lasten im Bereich 1 bis 100 Tonnen, bevorzugt im Bereich von 5 bis 65 Tonnen, ausgelegt sind.

Bevorzugt umfasst die Anlage mindestens einen Hebebock, welcher als Gleichlauft-Hebeboch ausgelegt ist. Gleichlauft-Hebeböcke weisen eine Mehrzahl an Gewindespindeln auf, welche parallel die gleiche Position anfahrend betrieben werden. Mithin können Hebeböcke mit zwei oder mehr synchronisierten Gewindespindeln als Gleichlauf-Hebeböcke angesehen werden.

Weitere Vorteile ergeben sich aus den Ausführungbeispielen. Es versteht sich, dass die vorbeschrieben Merkmale und Vorteile und nachfolgender Ausfürungsbeispiele nicht beschränkend aufzufassen sind. Zusätzliche, vorteilhafte Merkmale und zusätzliche Merkmalskombination, wie sie in der Beschreibung erläutert und im erläuterten Bereich etabliert sind, können im Rahmen des unabhängigen Anspruches im beanspruchten Gegenstand sowohl einzeln als auch abweichend kombiniert verwirklicht werden, ohne dass der Bereich der Erfindung verlassen würde.

### KURZE BESCHREIBUNG DER FIGUREN

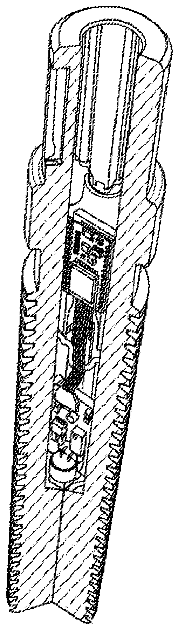

Die Figuren veranschaulichen an Hand der Prinzipskizze gemäß Fig. 1 eine vorteilhafte Ausführungsform einer erfindungsgemäßen Gewindespindel in dreidimensionaler Teilschnitt-Darstellung.

### DETAILLIERTE ERLÄUTERUNG DER ERFINDUNG AN HAND VONAUSFÜHRUNGBEISPIELEN

Gemäß Figur 1 weist eine vorteilhafte Ausführungsform einer erfindungsgemäßen Gewindespindel ein Trapezgewinde auf und ist als Gewindespindel ausgebildet, wie sie - besonders mit längeren Gewindeabschnitten - vorteilhaft in Hebeanlagen Verwendung findet. Die Gewindespindel ist in der Grundform einstückig und weist einen Gewindeabschnitt und einen Außenabschnitt mit geringerem Außendurchmesser auf. Mithin überragt das Trapezgewinde im Gewindeabschnitt die zylindrische Grundform und erlaubt entsprechend der Übersetzung des Gewindes das Einleiten von Kräften, wenn die Gewindespindel in Verwendungsposition in ein Gegengewinde einer Hebeanlage eingreifend einer Rotation unterworfen wird. Bei über den Außenabschnitt erzwungener Rotation wird eine Bewegung durch Einleiten der von Außen angreifenden Kraft erzwungen. In den verschiedenen Betriebsmodi wird das grundsätzlich einstückige Bauteil einer Torsion sowie einer einwirkenden Kraft unterworfen. Figur 1 veranschaulicht im Teilschnitt, wie ein Sackloch vom Außenabschnitt her bis in den Gewindeabschnitt hineinreichend vorteilhaft dimensioniert sein kann. Innerhalb des Sackloches, mithin endocorporal im Sinne von 'im Körperinneren der Gewindespindel', ist die mindestens eine Sensorbaugruppe angeordnet. Die Sensorbaugruppe ist integral mit der Gewindespindel verbunden. Erfindungsgemäß ist sichergestellt, dass eine die Gewindespindel deformierende Kraft gleichsinnig die Sensorbaugruppe deformieren wird. Bevorzugt werden drei oder mehr integrale Anschlüsse über eine Mantelfläche verteilt angeordnet, um Volumeneigenschaften und deren Änderung während der Krafteinwirkung im Betrieb detektieren zu können. Besonders bevorzugt umfasst dies Messdaten, welche über die symmetrische Längserstreckung einer Gewindespindel innerhalb eines längeren Kanals oder Loches Aussagen zulassen, um die Linearität des Kanals im Vergleich zu einem Sollwert bestimmen zu können. Bevorzugt umfassen die integralen Anschlüsse elektrisch leitfähige Anschlüsse, über welche Prüfsignale, bevorzugt Wechselstromsignale, mit variierten, bevorzugt charakteristischen, Frequenzen ausgesendet werden können. Die hier im Bereich des Sacklochbodens als Messdosen-Platinen-Kombination veranschaulichte Sensorbaugruppe ist über zentrosymmetrische Verbindungskabel mit einer integrierten Schaltung verbunden. Bevorzugt ist die Schaltung als programmierbare, berührungsfrei auflad- und regelbare Auswertschaltung ausgebildet, welche Messdaten , bevorzugt unter Abgabe von Testsignalen, erfasst, auswertet, komprimiert und berührungsfrei als Endergebnis, bevorzugt verschlüsselt, bereitstellt. Bevorzugt weist der gesamte Einsatz im Sackloch einen zentrosymmetrischen Schwerpunkt auf und erlaubt auch hohe Rotationsgeschwindigkeiten, welche sonst die eingesetzte Messeinheit selbst deformieren und die Messwerte verfälschen würden. Bevorzugt wird die gesamte Messeinheit endocorporal unter Ausrichtung notwendiger und vorteilhafter Verbindungspunkte angeordnet, integral im Bereich der Verbindungspunkte mit der Gewindespindel verbunden und besonders bevorzugt anschließend mit einer Füllmasse, bevorzugt einem wieder auflösbaren Harz auf Acrylatbasis, volumenfüllend eingegossen. Diese besonders vorteilhafte Kombination von Maßnahmen erlaubt es, frei stehende Dehn- und Torsions-Elemente einzusetzen und nachträglich durch die Füllmasse integral mit der Gewindespindel zu koppeln. Durch den vollvolumigen Stoffschluss werden sich Deformationen der Gewindespindel auf die gesamte Messeinheit übertragen und können vorteilhaft erfasst werden.

Bevorzugt werden weiterhin integrale, elektrisch leitende Verbindungspunkte zur Ausgabe eines Signals herangezogen, wobei das Signal auf die Außenhaut des Gewindes geleitet wird. Besonders bevorzugt wird das Signal von der Außenhaut des Gewindes über ein optionales Gleitmittel auf das Gegengewinde einer Anlage geleitet und detektiert. Die Auswerteinrichtung umfasst in dieser vorteilhaften Variante mindestens einen zweiten, ergänzenden Sensor, welcher mit weiteren Teilen der Anlage gekoppelt ist.

Bevorzugt wird dies mit mit Signalen ergänzt, welche über die Außenhaut der Gewindespindel über verschiedene Verbindungspunkte gleitet werden; das erlaubt vorteilhaft Zugang zu Daten, welche eine Aussage zur Qualität und Homogenität der Gewindeaußenhaut erlauben und besonders vorteilhaft bei Signalleitung durch die Anlage Aussagen zur Qualität des Schmiermittels und/oder Gegengewindes erlauben. Vorteilhaft werden die fusionierten Daten zu einer verbesserten Regelung einer Anlage herangezogen, besonders bevorzugt zur Bestimmung von Relativpositionen, zur Bestimmung der zulässigen Betriebsparameter und/oder zur Detektion des Zustands der Schmiermittel. Komplexe Daten können so erstmals ohne zusätzlichen, modularen Aufwand vorteilhaft in einer Hebeanlage erfasst und der Betrieb innerhalb der zulässigen Betriebsparameter, insbesondere im Hinblick auf die Flächengüte, den Kraftschluss und den Zustand der Schmiermittelfläche der ineinander eingreifenden Gewinde, digital dokumentiert werden. Ein verbessertes Produkt-, Anlagen- und Qualitäts-Management ist so zugänglich.

In weiterer, vorteilhafter Ausführungsform lassen sich sämtliche Messdaten dank miniaturisierter Sensorelektronik ermitteln und über nachgeschaltete Elektronik und Software verknüpfen, speichern, auswerten und auch kabellos übertragen. So ausgerüstete Gewindespindeln bieten einen erheblichen, datentechnischen und steuer- sowie regelungstechnischen Mehrwert und können als 'intelligent' - umgangssprachlich 'smart' - bezeichnet werden. Durch die intelligenten Gewindespindeln werden erfindungsgemäß Überlastsicherung - und vorteilhaft Prozessüberwachung und auch Verschleißerkennung - schneller, einfacher und direkter zugänglich.

Erfindungsgemäß umfasst eine Überlastsicherung über Sensorik die Erkennung einer Überschreitung bestimmter Lastwerte um rechtzeitig reagieren und sicherheitsrelevante Anlagen abschalten zu können. Vorteilhaft umfasst eine Prozessüberwachung Daten in Echtzeit, um Prozesse per datenbasierter, vorbeugender Instandhaltung zu verstetigen und die Performance von Anlagen anhand der Daten kontinuierlich zu optimieren.

Vorteilhaft umfasst Verschleißerkennung eine Analyse und einen Abgleich, welcher bei veränderten Lastprofile oder auftretenden Vibrationen oder veränderten Temperaturwerten einer Gewindespindel einen Verschleiß erkennbar macht, um eine vorausschauende Wartung zu veranlassen.

In vorteilhafter Ausführungsform erlaubt dabei eine integrierte Sensorik wichtige Rückschlüsse und vertiefende Informationen über den Zustand einer Maschine und/oder Anlage. Datenerfassung und Datenverarbeitung innerhalb der Sensorbaugruppe ermöglichen die direkte Speicherung von abgeleiteten Prozessparametern sowie die aktive Prozesssteuerung aufgrund von vordefinierten Ereignissen mittels eines Schnittstellenmoduls, bevorzugt eines standardisierten Kommunikationsprotokolls.

In weiterer, vorteilhafter Ausführungsform werden von den Sensoren erhobenen Daten via Bluetooth auf mobile Endgeräte mit passender Software und auf eine standardisierte Schnittstelle - ein sog. Gateway - übertragen. Die Messwerte lassen sich somit schnell und bequem auf mobilen Endgeräten einsehen und besonders bevorzugt grafisch veranschaulichen. Die bevorzugt in die Elektrik, besonders bevorzugt in Standard-Hutschienenmodulen einen Schaltschrank, integrierte Schnittstelle ermöglicht es, die Signale in analoger und/oder digitaler Form an übergeordnete Mess- und Regel-Systeme, bevorzugt mit nachgeschalteter Logik für dynamisch adaptierende Steuerungen, weiterzuleiten.

In weiterer, vorteilhafter Ausführungsform misst eine im Inneren einer Gewindespindel erfindungsgemäß angeordnete Sensorbaugruppe mit bis zu 500 Hz simultan die folgenden Messgrößen: Axialkräfte in Zug- / DruckRichtung, Torsion, Umdrehungen (RPM), Vibrationen sowie die Temperatur im Inneren. Diese Datenkombination eröffnet vorteilhaft vielfältige Berechnungen zu den Belastungsarten, Messdatenerhebungen sowie vergleichende Analysen, um einen Prozess ohne zusätzliche, externe Aufbauten oder Module verbessert überwachen, steuern und regeln zu können. Insbesondere bei der Nachrüstung von etablierten, kompakten Anlagen und als Nachrüstsatz für solche Anlagen können so komplexe Regelungskreise besonders preiswert bereitgestellt werden. In weiterer, vorteilhafter Ausführungsform erlauben Zug- und/oder Druckerfassung: das Messen von Lasten; das Erkennen / Wiegen von Gütern / Lastreserven; das Ersetzen von kostenintensiven Lastmessdosen, besonders bevorzugt bei Schwerlasthebeanlagen; das Veranlassen von Regeleingriffen bei Überschreitung bestimmter Lastwerte, besonders bevorzugt die Abschaltung einer Hebeanlage; den Abgleich vollständiger Lastprofile, bevorzugt zwischen verschiedenen Werken; das Bestimmen von Lastreserven vor Ort und Optimierung der Einsatzparameter und maximalen Laufzeiten per Fernwartung.

In weiterer, vorteilhafter Ausführungsform erlaubt die Torsionsbestimmung: das Messen des Losbrechmomentes von Muttern und Rückschlüsse auf das verwendete Schmierfett sowie das fehlerhafte Bedienen von Anlagen; erfindungsgemäße Detektion einer Drehmoment-Überlastung und vorbeugende Notabschaltung innerhalb eines Toleranzbereiches von 5% des maximal zulässigen Werts.

In weiterer, vorteilhafter Ausführungsform ermöglicht die Detektion der Umdrehungen: Identifizieren von Winkelbeschleunigungen, bevorzugt über Schwungmasse-Sensoren, Ableitung des Verfahrwegs einer Gewindemutter.

In vorteilhafter Ausführungsform erlaubt die Erfassung von Vibrationen: frühzeitige Rückschlüsse auf den Verschleißgrad einer Anlage; Kombination mit Temperaturprofilen zur Fehlerdetektion, bevorzugt unsachgemäßer Handhabung / Installation / Schmierung; Detektion von nicht vorgesehenem, mechanischem Zwang innerhalb eines Systems; Detektion von Fremdpartikeln / Abrieb und/oder Schmiermittel-Agglomeraten innerhalb einer Gewindeführung.

In weiterer, vorteilhafter Ausführungsform ermöglicht die Bestimmung der Temperatur: Erstellen von Temperaturprofilen, bevorzugt unter Bestimmung der Rauigkeit einer Gewindespindel und / oder Zustand von Schmiermitteln, besonders bevorzugt unter Analyse und Bewertung des Verschleißgrads einer Anlage und Bestimmung der wahrscheinlichen Restlaufzeit bis zum nächsten, notwendigen Service-Termin; Überwachung definierter Temperatur-Schwellenwerten und dynamisches Anpassen der zulässigen und/oder notwendigen Abkühlzeiten unter Pulsweitenmodulation von steuerungstechnisch vorgegebenen Abkühl-Perioden.

### Vielfältige Anwendungen in Anlagen- und Maschinenbau

In vorteilhafter Ausführungsform ist die beanspruchte Gewindespindel Teil einer Baugruppe oder eines Moduls im Anlagen- und Maschinenbau; besonders bevorzugt Teil einer Anlage, in der mindestens eine erfindungsgemäße Gewindespindel zum Einsatz kommt. Als Beispiele für solche Anlagen können Hebeanlagen, Werkzeugmaschinen, Extrusionsanlagen oder auch Dosier- sowie Förderanlagen genannt werden.

In weiterer, vorteilhafter Ausführungsform kann eine Anlage über einen Nachrüstsatz durch bloßen Ersatz einer der Gewindespindeln durch eine erfindungsgemäße Gewindespindel einfacher, effizienter, sicherer und günstiger gefahren werden. Die Sensorbaugruppe kann dabei kundenspezifisch auf die jeweilige Anlage ausgelegt werden. Ein Überprüfen des kontinuierlichen Zustands einer Anlage erlaubt bevorzugt eine Qualitätssicherung auf höchster Validitäts-Stufe; frühzeitig kann Verschleiß und damit einhergehende Minderung der Fertigungsqualität - mittels endocorporaler Sensorik erkannt und behoben werden. Gerade letztere Verwendung bietet - bevorzugt in Bereichen mit hohen Anforderungen wie zum Beispiel Automobilbau oder Medizintechnik - deutliche Wettbewerbsvorteile.

### INDUSTRIELLE ANWENDBARKEIT

Etablierte Gewindespindeln in industriellen Hebeanlagen können bisher nur mit zusätzlichen, nachteilig Raum fordernden Sensorbaugruppen gesteuert sowie geregelt werden.

Aufgabe ist, diesen Nachteil zu überwinden.

Mit der vorliegenden Erfindung wird erstmals eine verbesserte Gewindespindel und eine zugehörige Anlage vorgeschlagen, bei der eine Sensorbaugruppe mit Überlast-Sensor ohne zusätzlichen Raumbedarf die notwendige Funktion bereitstellt. Hebeanlagen für Lasten im Tonnenbereich können so erstmals ohne zusätzliche, Raum fordernde Module gemäß neuester Technik digital gesteuert und geregelt werden. Die Präzision wird erhöht und Ausfallzeiten und Fehlerquoten werden gesenkt, ohne dass ein komplexes und kostspieliges Um- oder Nach-Rüsten notwendig wird. Erhebliche, geldwerte Vorteile können damit auch mit etablierten Anlagen preisgünstig und einfach erschlossen werden.

## Patentansprüche

1. Gewindespindel mit einem Gewinde und einer Sensorbaugruppe, wobei die Sensorbaugruppe stoffschlüssig mit der Gewindespindel verbunden und im Inneren der Gewindespindel mit Abstand zu deren Gewinde angeordnet ist derart, dass eine die Gewindespindel deformierende Kraft gleichsinnig die Sensorbaugruppe deformieren wird, wobei die Sensorbaugruppe einen Überlast-Sensor umfasst.

2. Gewindespindel nach dem vorhergehenden Anspruch, **dadurch gekennzeichnet, dass** die Sensorbaugruppe neben dem Überlast-Sensor mindestens eine berührungslose Kommunikations-Einrichtung umfasst.

3. Gewindespindel nach einem der vorhergehenden Ansprüche, **dadurch gekennzeichnet, dass** die Sensorbaugruppe mindestens eine weitere Einrichtung umfasst, die Einrichtung ausgewählt aus einer Gruppe von Einrichtungen, die Gruppe von Einrichtungen bestehend aus WLAN-Chipsatz, Stromerzeugungs-Empfangsspule, Sender-Einrichtung, Datenkompressions-Einrichtung, integrierter Schaltkreis, Kommunikations-Chipsatz, Torsions-Sensor, Last-Sensor, Spannungs-Sensor, Strom-Sensor, Widerstands-Sensor, Temperatur-Sensor, Impedanz-Messbrücke, Stromsignal-Generator, Wechselstromsignal-Generator, Schallsignal-Generator, Ultraschallsignal-Generator, FT-Analyse-Chipsatz, FEM-Analyse-Chipsatz, Analyse-Chipsatz, programmierbarer Chipsatz, Chipsatz mit zentrosymmetrisch entlang einer Längs-Achse der Gewindespindel EP 21000150 Reinfassung (EP 3 919 781 A1) Seite 21 von 21 ausgerichtetem Schwerpunkt, Schüttdichte-Sensor, Dichte-Sensor, Viskositäts-Sensor, Druck-Sensor, Drehmoment-Sensor, Positions-Sensor, Abstands-Sensor, Dichtigkeits-Sensor, Bruch-Sensor, Datenfusions-Chipsatz, Datenverarbeitungs-Chipsatz, programmierbarer Prozessor, Datenspeicher-Einheit, Datenprotokoll-Einheit, Verschlüsselungs-Chipsatz, Kommunikations-Chipsatz mit industriellem Kommunikationsprotokoll, Kommunikations-Chipsatz mit Bus-konformem Kommunikationsprotokoll, Beschleunigungs-Sensor, Vibrations-Sensor.

4. Anlage umfassend die Gewindespindel nach einem der vorhergehenden Ansprüche, **dadurch gekennzeichnet, dass** die Anlage eine Anlage aus einer Gruppe von Anlagen ist, die Gruppe von Anlagen bestehend aus Hebeanlage, Fahrzeughebeanlage, Bahnhebeanlage, Bohranlage, Windkraftanlage, Hebebockanlage, Hebebockanlage mit mehreren Gleichlauf-Hebeböcken, Kernbohranlage, Kernbohranlage für Vollzylinder, Tiefloch-Bohranlage.

5. Anlage nach dem vorhergehenden Anspruch, **dadurch gekennzeichnet, dass** die Anlage eine Hebeanlage mit mindestens 2 Hebeböcken ist.

6. Anlage nach dem vorhergehenden Anspruch, **dadurch gekennzeichnet, dass** die Hebeböcke auf Lasten im Bereich von 1 bis 100 Tonnen ausgelegt sind.

## Claims

1. Threaded spindle comprising a thread and a sensor assembly, wherein the sensor assembly is integrally connected to the threaded spindle and is arranged inside the threaded spindle at a distance from the thread thereof such that a force that deforms the threaded spindle will deform the sensor assembly in the same direction, wherein the sensor assembly comprises an overload sensor.

2. Threaded spindle according to the preceding claim,
**characterized in that** the sensor assembly comprises at least one contactless communication device in addition to the overload sensor.

3. Threaded spindle according to either of the preceding claims,
**characterized in that** the sensor assembly comprises at least one further device, the device being selected from a group of devices, the group of devices consisting of a WLAN chipset, current generation receiver coil, transmitter device, data compression device, integrated circuit, communication chipset, torsion sensor, load sensor, voltage sensor, current sensor, resistance sensor, temperature sensor, impedance measuring bridge, current signal generator, AC signal generator, sound signal generator, ultrasonic signal generator, FT analysis chipset, FEM analysis chipset, analysis chipset, programmable chipset, chipset having a center of gravity oriented centrosymmetrically along a longitudinal axis of the threaded spindle, bulk density sensor, density sensor, viscosity sensor, pressure sensor, torque sensor, position sensor, distance sensor, leakage sensor, fracture sensor, data fusion chipset, data processing chipset, programmable processor, data storage unit, data protocol unit, encryption chipset, communication chipset having an industrial communication protocol, communication chipset having a bus-compliant communication protocol, acceleration sensor, and vibration sensor.

4. System comprising the threaded spindle according to any of the preceding claims, **characterized in that** the system is a system from a group of systems, the group of systems consisting of a lifting system, vehicle lifting system, railway lifting system, drilling system, wind turbine system, lifting jack system, lifting jack system comprising a plurality of synchronous lifting jacks, core drilling system, core drilling system for solid cylinders, and deep hole drilling system.

5. System according to the preceding claim, **characterized in that** the system is a lifting system comprising at least 2 lifting jacks.

6. System according to the preceding claim, **characterized in that** the lifting jacks are designed for loads in the range of 1 to 100 tons.

## Revendications

1. Broche filetée comportant un filetage et un ensemble de capteurs, dans laquelle l'ensemble de capteurs est relié par liaison de matière à la broche filetée et est disposé à l'intérieur de la broche filetée à distance de son filetage, de telle sorte qu'une force déformant la broche filetée déforme l'ensemble de capteurs dans le même sens, dans laquelle l'ensemble de capteurs comprend un capteur de surcharge.

2. Broche filetée selon la revendication précédente, **caractérisée en ce que** l'ensemble de capteurs comprend au moins un dispositif de communication sans contact en plus du capteur de surcharge.

3. Broche filetée selon l'une des revendications précédentes,
**caractérisée en ce que** l'ensemble de capteurs comprend au moins un autre dispositif, le dispositif étant choisi dans un groupe de dispositifs, le groupe de dispositifs étant constitué de jeu de puces WLAN, bobine de réception de génération de courant, dispositif émetteur, dispositif de compression de données, circuit intégré, jeu de puces de communication, capteur de torsion, capteur de charge, capteur de tension, capteur de courant, capteur de résistance, capteur de température, pont de mesure d'impédance, générateur de signal de courant, générateur de signal de courant alternatif, générateur de signal sonore, générateur de signal ultrasonore, jeu de puces d'analyse FT, jeu de puces d'analyse FEM, jeu de puces d'analyse, jeu de puces programmables, jeu de puces comportant un centre de gravité orienté de manière centrosymétrique le long d'un axe longitudinal de la broche filetée, capteur de densité apparente, capteur de densité, capteur de viscosité, capteur de pression, capteur de couple, capteur de position, capteur de distance, capteur d'étanchéité, capteur de rupture, jeu de puces de fusion de données, jeu de puces de traitement de données, processeur programmable, unité de stockage de données, unité de protocole de données, jeu de puces de cryptage, jeu de puces de communication comportant un protocole de communication industriel, jeu de puces de communication comportant un protocole de communication conforme au bus, capteur d'accélération, capteur de vibrations.

4. Installation comprenant la broche filetée selon l'une des revendications précédentes, **caractérisée en ce que** l'installation est une installation d'un groupe d'installations, le groupe d'installations étant constitué d'installation de levage, installation de levage de véhicules, installation de levage de rails, installation de forage, éolienne, installation à vérin de levage, installation à vérins de levage comportant plusieurs vérins de levage synchronisés, installation de carottage, installation de carottage pour cylindre plein, installation de forage de trous profonds.

5. Installation selon la revendication précédente, **caractérisée en ce que** l'installation est une installation de levage comportant au moins 2 vérins de levage.

6. Installation selon la revendication précédente, **caractérisée en ce que** les vérins de levage sont conçus pour des charges situées dans la plage allant de 1 à 100 tonnes.
